# EUROPEAN PATENT APPLICATION

(11) **EP 3 460 728 A1**
(43) Date of publication of application: **27.03.2019**
(21) Application number: 18194867.0
(22) Date of filing: 17.09.2018
(51) Int. Cl.: G06Q 10/00, G07G 1/12, G06Q 20/20

(54) **RECORDING MEDIUM, MANAGEMENT TERMINAL, AND METHOD FOR MANAGING SALES DATA PROCESSING DEVICE**

(30) Priority: 21.09.2017 JP 2017181011
(71) Applicant: Casio Computer Co., Ltd., Tokyo 151-8543 (JP)
(72) Inventor: ITAKURA, Katsuyuki, Tokyo, 205-8555 (JP)
(74) Representative: Plougmann Vingtoft a/s

(57) **Abstract**

A non-transitory computer-readable recording medium stores a program for causing a computer to execute steps, the steps including:
communication processing of communicating with a sales data processing device through a wireless communication channel, and obtaining a shop identification image that is printed on a receipt by the sales data processing device; and
display control processing of causing the shop identification image obtained in the communication processing to be displayed on a display unit.

## Description

### BACKGROUND

### 1. Technical Field

The present invention relates to a recording medium, a management terminal, and a method for managing a sales data processing device.

### 2. Related Art

In recent years, there is proposed a technique in which a smart phone and an electronic cash register are communicably connected to each other, and data in the electronic cash register is backed up or restored. When a failure of hardware of the electronic cash register has occurred, the hardware is replaced with another individual, and backup data is then restored. Therefore, the backup data is configured so as to be restorable in any individual electronic cash register.

A customer engineer of a register agency maintains a plurality of kinds of electronic cash registers in a plurality of shops. In a case where the customer engineer restores, in an electronic cash register, a backup of register setting data stored in a smart phone, there is a possibility that wrong backup data will be transmitted.

JP 2002-176679 A discloses the prior art in which an image is displayed so as to enable easy recognition of a communication partner. The abstract of JP 2002-176679 A contains the following statement: "a name of a communication partner, a telephone number, and an e-mail address are associated with each other and stored in a telephone directory data storage area 60a as telephone directory data. In addition, identification information of image data used for notification operation at the time of incoming call and at the time of receiving an e-mail, identification information of a ringtone and a ringing melody, identification information of a background color, identification information of a vibration pattern of a vibration body 53 are stored with the information associated with the telephone directory data. Image data is stored in an image data storage area 60b while being associated with identification information. Data of a plurality of ringtones and a plurality of ringing melodies are stored in a ringtone data storage area 60c. A control unit 100 is configured to display a plurality of images on a display unit 71 at the time of incoming call and at the time of receiving an e-mail on the basis of the telephone directory data stored in the telephone directory data storage area 60a, thereby performing the notification operation."

In the invention disclosed in JP 2002-176679 A, a communication partner is identified by displaying an image of an apparatus. However, shops of the same corporation often employ electronic cash registers (sales data processing devices) each having the same model number, and therefore it is not possible to identify a communication destination only by an image of an apparatus. Moreover, association of register setting backup data in a smart phone with an electronic cash register of a communication partner cannot be determined only by merely displaying the image of the apparatus of the communication partner, and therefore there is a possibility that the register setting backup data will be restored at a wrong restore destination. Further, when register setting data of an electronic cash register is backed up, there is a possibility that a shop number or a register number will be processed by mistake.

### SUMMARY

To solve the above described problem, in a management terminal of the present invention, a non-transitory computer-readable recording medium stores a program for causing a computer to execute steps, the steps including:
communication processing of communicating with a sales data processing device through a wireless communication channel, and obtaining a shop identification image that is printed on a receipt by the sales data processing device; and
display control processing of causing the shop identification image obtained in the communication processing to be displayed on a display unit.

### BRIEF DESCRIPTION OF THE DRAWINGS

Fig. 1 is a diagram illustrating a system according to the present embodiment;
Fig. 2 is an outside drawing illustrating an electronic cash register;
Fig. 3 is a drawing illustrating a mode switch;
Fig. 4 is a block diagram illustrating the electronic cash register;
Fig. 5 is a block diagram illustrating a smart phone;
Fig. 6 is a diagram illustrating programs and data that are stored in each device of the system;
Fig. 7 is a drawing illustrating a structure of register attribute data;
Fig. 8 is a drawing illustrating a structure of register setting data;
Fig. 9 is an example of a receipt printed by the electronic cash register;
Fig. 10 is a passcode input screen of the smart phone;
Fig. 11 is a shop selection screen in an initial state;
Fig. 12 is a shop selection screen after the selection of a shop;
Fig. 13 is a flowchart illustrating display processing of displaying a store name stamp, a receipt message, an apparatus image, and a model name;
Fig. 14 is a menu screen;
Fig. 15 is a register setting backup screen;
Fig. 16 is an operation screen of the electronic cash register;
Fig. 17 is a display screen illustrating a state in which the electronic cash register is wirelessly communicating;
Fig. 18 illustrates printing output when a register setting backup has been successfully completed;
Fig. 19 is a register setting backup screen displayed when register setting data has not been backed up;
Fig. 20 is a sequence diagram illustrating backup operation of backing up register setting data;
Fig. 21 is a register setting restore screen;
Fig. 22 illustrates printing output when register setting restoring has been successfully completed;
Fig. 23 is a register setting restore screen displayed when register setting data has not been backed up;
Fig. 24 is a sequence diagram illustrating restore operation of restoring register setting data;
Fig. 25 is a register settlement screen;
Fig. 26 is a settlement data receiving view;
Fig. 27 is a settlement data erasing view;
Fig. 28 is a successful completion view;
Fig. 29 is a screen displayed when register settlement has been received;
Fig. 30 illustrates printing output when settlement processing has been successfully completed;
Fig. 31 is a sequence diagram illustrating register settlement operation;
Fig. 32 is a sequence diagram illustrating operation of uploading register settlement into a cloud;
Fig. 33 is a shop selection screen in an initial state in a modified example;
Fig. 34 is a shop selection screen displayed after the recognition of a register; and
Fig. 35 is a sequence diagram illustrating register recognition operation.

### DETAILED DESCRIPTION

Embodiments for carrying out the present invention will be described in detail below with reference to the accompanying drawings.

The present embodiment relates to a register tool application in which a smart phone (mobile terminal) causes a register to back up register settings, and to perform register settlement, by using a short-distance wireless communication means, thereby backing up or restoring data. The register tool application displays, on a screen, a shop name stamp (shop identification image) printed on a receipt. This shop name stamp is obtained from the data backed up in the smart phone.

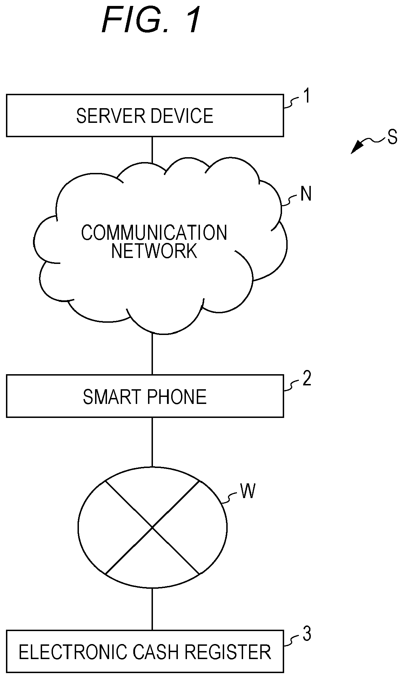

Fig. 1 is a diagram illustrating a system according to the present embodiment.

In a system S, a smart phone 2 is connected to a server device 1 through a communication network N. In the system S, this smart phone 2 is further connected to an electronic cash register 3 through a wireless network W so as to enable mutual communications therebetween. The electronic cash register 3 according to the present embodiment is a sales data processing device that backs up and restores register attribute data, register setting data, and sales data in the smart phone 2. The smart phone 2 is a management terminal that causes this electronic cash register 3 to perform backup, restore, settlement, inspection or the like.

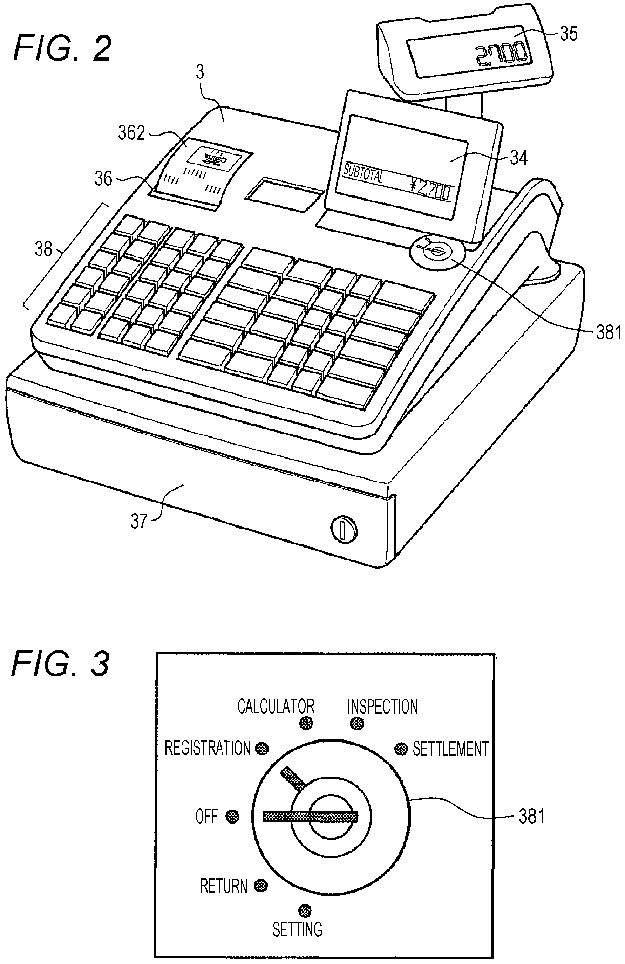

Fig. 2 is an outside drawing illustrating the electronic cash register 3.

The electronic cash register 3 is configured by arranging a housing on a drawer 37. It should be noted that the drawer 37 can be arranged by being separated from the housing of the electronic cash register 3.

A keyboard 38 is arranged on the front side of this housing, a printing unit 36 is arranged on the left back side of the housing, and a display unit 34, a mode switch 381, and a customer display unit 35 are arranged on the right back side of the housing. It should be noted that the printing unit 36 performs printing on roll paper (receipt paper) 362.

An operator of the electronic cash register 3 is allowed to register a commodity by inputting a unit price and a division of a commodity through the keyboard 38 to display a subtotal, and then by inputting a deposit. When this commodity is registered, the electronic cash register 3 pulls out the drawer 37, and receives the deposit.

Fig. 3 is a drawing illustrating a mode switch 381.

By inserting an attached mode key, the mode switch 381 switches an operation mode of the electronic cash register 3. The electronic cash register 3 has the following operation modes: settlement, inspection, calculator, registration, OFF, return, and setting.

"Settlement" is a mode used when settlement of sales is performed by the electronic cash register 3. "Inspection" is a mode used when sales are inspected by the electronic cash register 3. "Calculator" is a mode used when the electronic cash register 3 is used as a calculator. "Registration" is a mode used when sales are registered by the electronic cash register 3. "OFF" is a mode used when the electronic cash register 3 is powered off. "Return" is a mode used when return processing (return) is performed by the electronic cash register 3. "Setting" is a mode used when various settings adapted to a shop are performed for the electronic cash register 3.

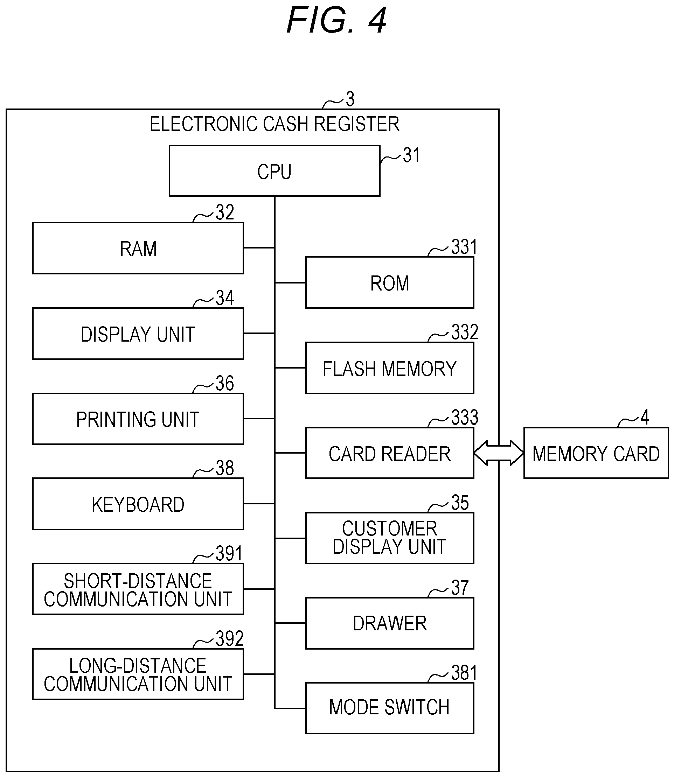

Fig. 4 is a block diagram illustrating the electronic cash register 3.

The electronic cash register 3 is provided with a Central Processing Unit (CPU) 31, a Random Access Memory (RAM) 32, a Read Only Memory (ROM) 331, a flash memory 332, and a card reader 333. The electronic cash register 3 further includes the display unit 34, the customer display unit 35, the printing unit 36, the drawer 37, the keyboard 38, the mode switch 381, a short-distance communication unit 391, and a long-distance communication unit 392. This electronic cash register 3 is a sales data processing device that processes sales data.

From among various kinds of application programs corresponding to the electronic cash register 3, which are stored in the ROM 331, the flash memory 332 or the like, the CPU 31 expands a specified application program, and various instructions input from the keyboard 38, in a working memory in the RAM 32. In addition, according to the application program expanded in the working memory according to the input instruction and input data, the CPU 31 executes various kinds of processing, then stores the result of the processing in the working memory in the RAM 32, and displays the result of the processing on the display unit 34. The CPU 31 then saves, in a saving destination in the RAM 32, the processing result stored in the working memory.

The CPU 31 functions as a print control means for causing the printing unit 36 to print sales data. When the settlement mode or the inspection mode is specified by the mode switch 381, the CPU 31 functions as an input control means for accepting the specification as a print instruction to print sales data.

The flash memory 332 is configured by a rewritable storage medium such as a magnetic optical storage medium or a semiconductor memory. This flash memory 332 stores, for example, a system program, various kinds of application programs corresponding to this system, and data processed by these programs.

The memory card 4 can be inserted/removed into/from the card reader 333. A desired file can be read/written from/to the inserted memory card 4. The card reader 333 is a storage control means for causing the memory card 4 (external storage medium) to store sales data.

The display unit 34 and the customer display unit 35 according to the present embodiment are each configured by a seven-segment liquid crystal display element or light emitting element, and each support displaying of numbers, and simple displaying of alphabets. The electronic cash register 3 generates a signal based on display data input from the CPU 31, and performs various kinds of displaying on the display unit 34 and the customer display unit 35.

The printing unit 36 is, for example, a thermal-transfer printer, and prints and outputs receipt information on the roll paper (receipt paper) 362 by an instruction of the CPU 31. Moreover, the printing unit 36 prints a settlement report and an inspection report on the receipt paper by a print instruction of the CPU 31.

The drawer 37 is a part that stores cash such as coins and paper currencies. An operator operates the electronic cash register 3 to perform unlocking and locking, and the operator is allowed to draw and store cash.

The keyboard 38 is provided with: various kinds of function keys including a division key, a cash/deposit key, and a clear key; and numeric input keys, and the like. The keyboard 38 outputs a pressing signal generated by pressing each key to the CPU 31.

It should be noted that an input device is not limited to the keyboard 38, and that any device may be employed so long as the device is capable of giving an input instruction. For example, a touch panel (touch screen) may be employed as an alternative to the keyboard 38. In this case, coordinates instructed by an input pen, a fingertip or the like are sensed, and position coordinates instructed by coordinate reading principle based on an electromagnetic induction method, a magnetostriction method, a pressure-sensitive method or the like are detected.

The mode switch 381 is a switch that determines an operation mode of the electronic cash register 3.

The short-distance communication unit 391 is a communication means based on, for example, Bluetooth (registered trademark) Low Energy, or Wi-Fi (registered trademark), and is capable of mutually communicating with the smart phone 2 (an example of the external device). The short-distance communication unit 391 functions as a communication means for transmitting sales data to the smart phone 2 through a wireless communication channel.

The long-distance communication unit 392 is a communication means for performing long-distance wireless communication by, for example, Long Term Evolution (LTE). Communicating with the smart phone 2 by this long-distance communication unit 392 enables a customer engineer to remotely back up various kinds of data without visiting a shop.

In addition, a part or all of programs, data and the like, which are stored in the flash memory 332, may be received from other apparatuses, such as a server and a client (not illustrated), through a transmission medium such as a network line, before they are stored. Moreover, the flash memory 332 may be a recording medium of a server constructed on the network. Further, each program may be configured to be transmitted to a server and a client (not illustrated) through a transmission medium such as a network line, and to be installed in these apparatuses.

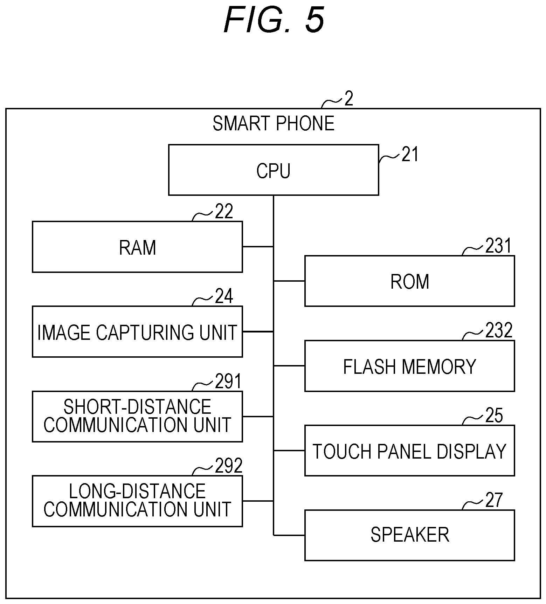

Fig. 5 is a block diagram illustrating the smart phone 2.

The smart phone 2 is provided with a CPU 21, a RAM 22, a ROM 231, a flash memory 232, an image capturing unit 24, a touch panel display 25, a speaker 27, a short-distance communication unit 291, and a long-distance communication unit 292.

The CPU 21 (a display control means, an accepting means, a model information acquisition means) executes a program stored in the ROM 231 and the flash memory 232, and reads and writes data by using the RAM 22 as a work area. In addition, the CPU 21 executes display control processing, acceptance processing, and model information acquisition processing.

The RAM 22 is a volatile memory from/to which data can be read/written at high speed.

The flash memory 232 is a volatile memory from/to which data can be read/ written.

The image capturing unit 24 is provided with: a lens tube in which a lens group is arranged; an image-capturing element that captures an object image by this lens group; and an image processing unit that processes captured data captured by the image-capturing element to acquire image information.

The touch panel display 25 is formed by layering a transparent touch panel on, for example, a liquid crystal display or an organic EL display, and operates as a display operation means.

The speaker 27 converts an electric signal into audio.

The short-distance communication unit 291 is a communication means for performing short-distance wireless communication by, for example, Bluetooth (registered trademark) Low Energy or Wi-Fi (registered trademark), and mutually communicates with the electronic cash register 3 through a wireless communication channel.

The long-distance communication unit 292 is a communication means for performing long-distance wireless communication by, for example, LTE.

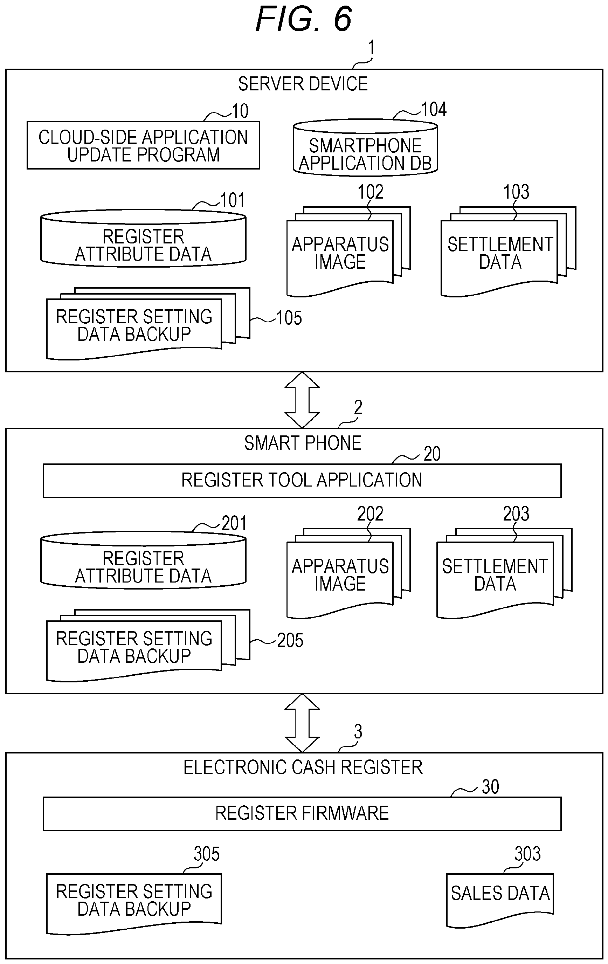

Fig. 6 is a diagram illustrating programs and data that are stored in each device of the system.

The server device 1 stores, in an unillustrated storage unit, a cloud-side application update program 10, a register attribute data 101, a plurality of register setting data backups 105, a plurality of apparatus images 102, a plurality of pieces of settlement data 103, and a smartphone application database 104. An unillustrated CPU of the server device 1 executes the cloud-side application update program 10, and consequently a smartphone application of each smart phone 2 is updated by each smartphone application stored in the smartphone application database 104.

The plurality of pieces of register attribute data 101 are synchronized with register attribute data 201 set in the smart phone 2. The plurality of register setting data backups 105 are synchronized with register setting data backup 205 backed up in the smart phone 2. The plurality of apparatus images 102 are images of the external appearance of the electronic cash register 3. The plurality of pieces of settlement data 103 are backups of settlement data received from the respective electronic cash registers 3. Here, the settlement data is data obtained by aggregating, by division, sales registered data registered until the sales closing time (for example, the sales closing time of the day). The smartphone application database 104 is a database that stores a register tool application 20 of each version.

The smart phone 2 synchronizes the register attribute data 101 of the server device 1 with its own register attribute data 201, for example, when an application is started. In addition, the smart phone 2 backs up data of the electronic cash register 3, and then synchronizes the data with data of the server device 1.

The smart phone 2 stores the register tool application 20, the register attribute data 201, the plurality of register setting data backups 205, a plurality of apparatus images 202, and a plurality of pieces of settlement data 203 in the flash memory 232. The register tool application 20 is installed by being downloaded from the server device 1. By using this register tool application 20, the settlement data 203 is received from the electronic cash register 3, and is then saved. Using the register tool application 20 makes it possible to back up register setting data 305 to the register setting data backup 205, and to restore the register setting data backup 205 to the register setting data 305.

The electronic cash register 3 stores a register firmware 30, the register setting data 305, and sales data 303 in the flash memory 332. Using this register firmware 30 makes it possible to generate the sales data 303 in which sales have been registered, to settle the sales data 303, and to perform operation based on the register setting data 305.

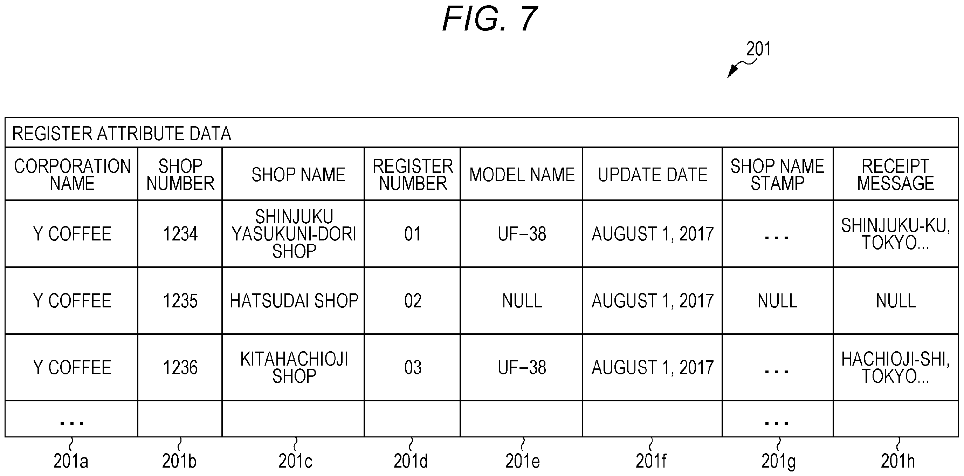

Fig. 7 is a drawing illustrating a structure of the register attribute data 201 set in the smart phone 2. The register attribute data 201 indicates attributes of the electronic cash register 3, and includes corporation name data 201a, shop number data 201b, shop name data 201c, register number data 201d, model name data 201e, update date data 201f, shop name stamp data 201g, and receipt message data 201h.

The corporation name data 201a is a name of a corporation that manages a shop in which the electronic cash register 3 is installed. The shop number data 201b and the shop name data 201c are a shop number and a shop name of the shop in which the electronic cash register 3 is installed. The register number data 201d is a register number of the electronic cash register 3. The model name data 201e is a model name of the electronic cash register 3, and is set after the register setting data 301 has been backed up. The update date data 201f is the date on which this register attribute data has been updated.

The shop name stamp data 201g is data of a shop identification image printed on a receipt, and is set after the register setting data 301 has been backed up. The receipt message data 201h is shop identification character string data printed on a receipt, and is set after the register setting data 301 has been backed up.

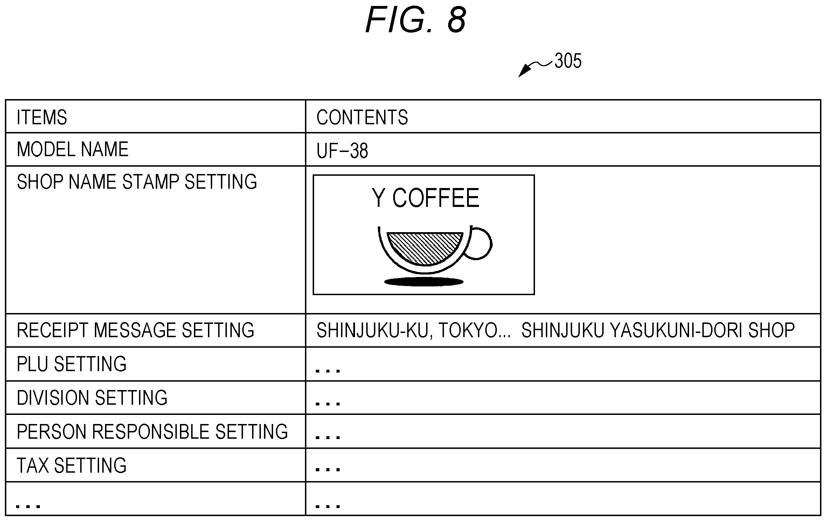

Fig. 8 is a drawing illustrating a structure of the register setting data 301.

The register setting data 301 contains items including a model name, shop name stamp setting, receipt message setting, PLU setting, division setting, person responsible setting, and tax setting.

The model name field stores a name of a model of the electronic cash register 3 that stores the register setting data 301. The shop name stamp setting field stores a shop name stamp (image) that is printed on a receipt by the electronic cash register 3. The receipt message setting field stores a message (character string) that is printed on a receipt by the electronic cash register 3. The PLU setting field stores correspondence information about correspondence between a division and a price. The division setting field stores division information that is input into the electronic cash register 3. The person responsible setting field stores information of a person responsible for the electronic cash register 3. The tax setting field stores, for example, information related to consumption tax.

When a failure of hardware of the electronic cash register has occurred, the hardware is replaced with another individual, and backup data is then restored therein, which enables recovery in a short time period. Therefore, the register setting data 301 is configured so as to be restorable in any individual electronic cash register.

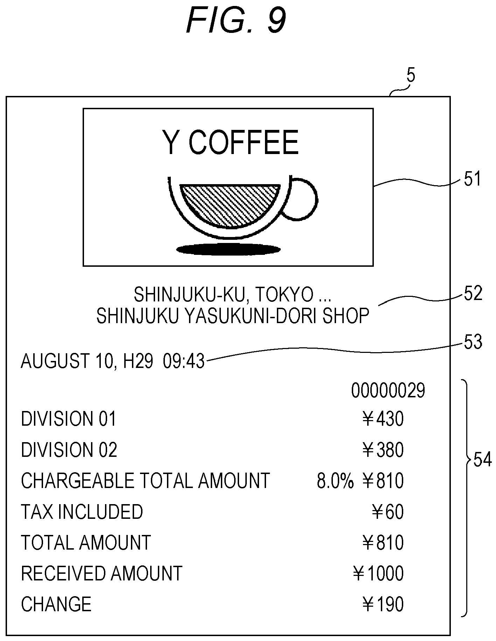

Fig. 9 illustrates, as an example, a receipt 5 that has been printed by the electronic cash register 3.

A shop name stamp 51 and shop name information 52 are printed on the receipt 5, and the issued date and time 53 and purchase information 54 are printed thereunder. The shop name stamp 51 is image data that identifies a shop, and is obtained by printing the shop name stamp data 201g shown in Fig. 7. The shop name information 52 is character string data that identifies a shop, and is obtained by printing the receipt message data 201h shown in Fig. 7. In this manner, a shop that has issued the receipt can be indicated by the image and the character string.

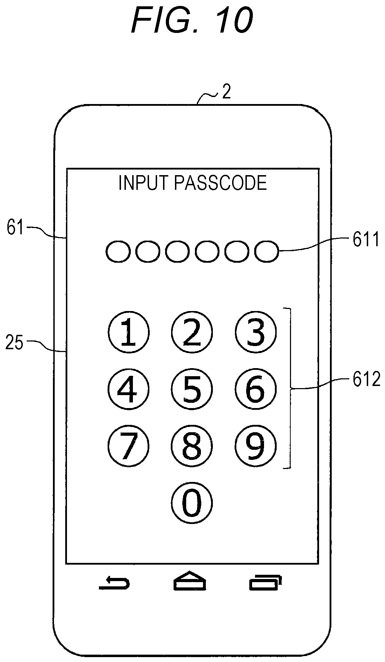

Fig. 10 is a passcode input screen 61 displayed when the register tool application 20 has been started on the smart phone 2.

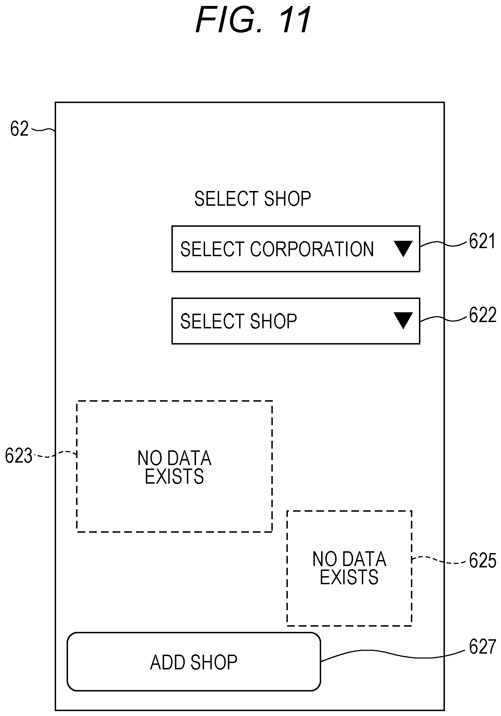

On the passcode input screen 61, "Input passcode" is displayed in the upper part of the screen, and a six-digit passcode 611 and a ten-key 612 are displayed thereunder. By correctly inputting a six-digit passcode by a customer engineer, the passcode input screen 61 shifts to a screen of "Select shop" shown in Fig. 11.

Fig. 11 is a shop selection screen 62 in an initial state.

On the shop selection screen 62, "Select shop" is displayed in the upper part of the screen, and a corporation name selection picker 621, a shop selection picker 622, a shop name stamp area 623, an apparatus image area 625, and an "Add shop" button 627 are displayed.

The corporation name selection picker 621 is an accepting means for accepting a selection of a corporation name, and is realized as a picker. "Select corporation" is displayed in the corporation name selection picker 621.

The shop selection picker 622 is an accepting means for accepting a selection of a shop, and is realized as a picker. "Select shop" is displayed in the shop selection picker 622. The shop name stamp area 623 is an area in which a shop name stamp of a selected shop is displayed. Here, "No data exists" is displayed. The apparatus image area 625 is an area in which an image of the electronic cash register 3 in a selected shop is displayed. Here, "No data exists" is displayed.

The "Add shop" button 627 is a button for shifting to a screen (not illustrated) used to newly add a shop.

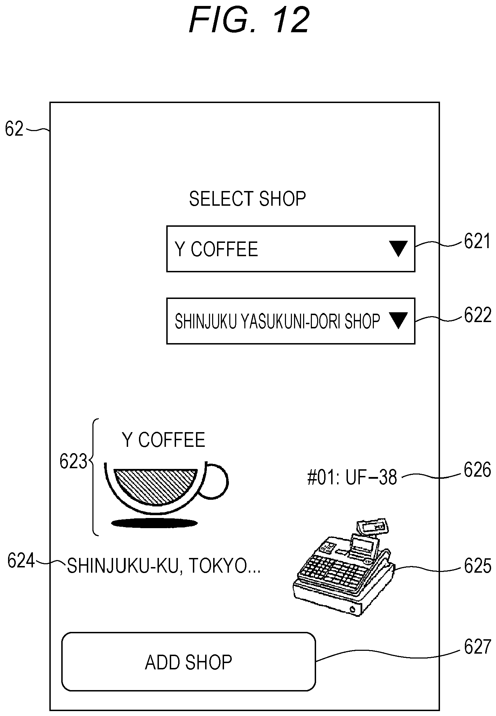

By tapping the shop selection picker 622 to select Shinjuku Yasukuni-dori shop, the smart phone 2 shifts to a screen shown in Fig. 12.

Fig. 12 is a shop selection screen 62 after the selection of a shop.

On the shop selection screen 62, "Select shop" is displayed in the upper part of the screen, and the corporation name selection picker 621, the shop selection picker 622, the shop name stamp area 623, the apparatus image area 625, and the "Add shop" button 627 are displayed. Moreover, a receipt message box 624 and a model name text box 626 are displayed.

"Y coffee" is selectively displayed in the corporation name selection picker 621. "Shinjuku Yasukuni-dori shop" is selectively displayed in the shop selection picker 622. A shop name stamp of a selected shop is displayed in the shop name stamp area 623. The receipt message box 624 is newly displayed on the lower side thereof. The shop selection screen 62 functions as a display control means by which the electronic cash register 3 obtains a shop name stamp to be printed on a receipt from the electronic cash register 3 by using the short-distance communication unit 291, and displays this shop name stamp in the shop name stamp area 623.

An image of the electronic cash register 3 in the Shinjuku Yasukuni-dori shop of Y coffee is displayed in the apparatus image area 625. The model name text box 626 is displayed on the upper side thereof. Incidentally, "#01" of the model name text box 626 means the first electronic cash register 3 in the Shinjuku Yasukuni-dori shop, and "UF-38" indicates a model name of the electronic cash register 3. In other words, the shop selection screen 62 functions as a display control means by which the electronic cash register 3 obtains a shop name stamp to be printed on a receipt from the electronic cash register 3 by using the short-distance communication unit 291, and displays this shop name stamp together with an apparatus image indicating the electronic cash register 3. In addition, the CPU 21 functions as a model information acquisition means by which model information that is stored in the electronic cash register 3 selected by a user is acquired by the short-distance communication unit 291.

Thus, when a corporation and a shop have been selected, displaying is switched between the shop name stamp data 201g included in the register setting data backup 205 backed up from the electronic cash register 3 of this shop, and the receipt message data 201h (refer to Fig. 7). Consequently, the customer engineer does not make a mistake in associating the electronic cash register 3 with the register setting data backup 205.

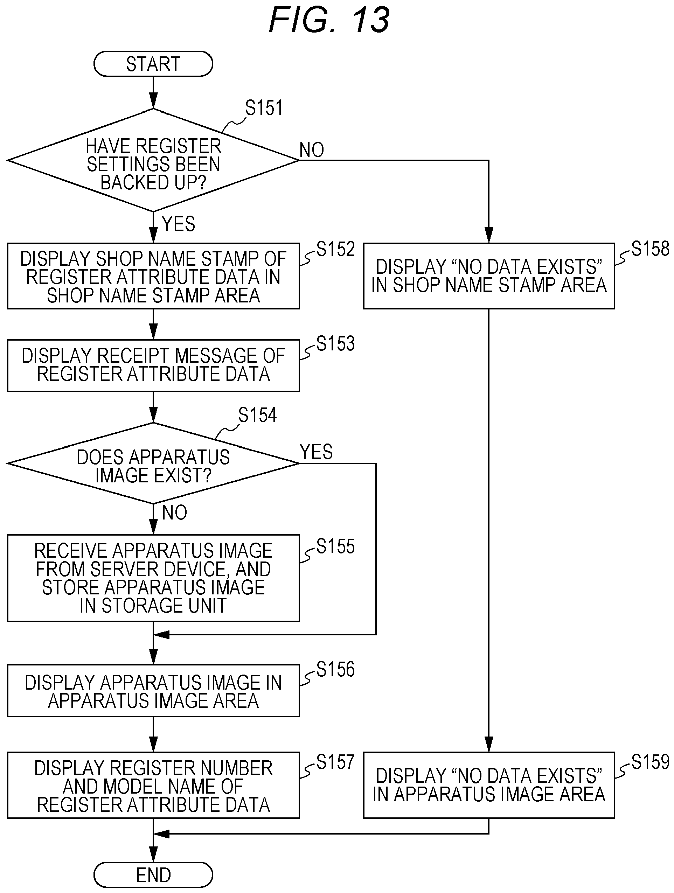

Fig. 13 is a flowchart illustrating display processing of displaying a store name stamp, a receipt message, an apparatus image, and a model name.

First of all, the CPU 21 of the smart phone 2 determines whether or not the register setting data 305 of the corresponding electronic cash register 3 has been backed up to this smart phone 2 (step S151). When the CPU 21 determines that the register setting data 305 has been backed up (Yes), the process proceeds to processing of step S152. When the CPU 21 determines that the register setting data 305 has not been backed up (No), the process proceeds to processing of step S158.

Steps S152 to S157 are processing of displaying a shop name stamp, a receipt message, an apparatus image, and a model name. The CPU 21 displays the shop name stamp data 201g of the register attribute data 201 in a shop name stamp area (step S152), and displays the receipt message data 201h of the register attribute data 201 on the lower side thereof.

The CPU 21 determines whether or not an apparatus image 202 of the corresponding electronic cash register 3 exists (step S154). When it is determined that an apparatus image exists (Yes), the process proceeds to step S156. When it is determined that an apparatus image does not exist (No), the CPU 21 receives an apparatus image from the server device 1, and stores the apparatus image in the storage unit (step S155), on the basis of model name data 201e of the register attribute data 201. Subsequently, the process proceeds to step S156.

In step S156, the CPU 21 displays the apparatus image in the apparatus image area. Moreover, the CPU 21 displays the register number data 201d and the model name data 201e included in the register attribute data 201 (step S157), and then ends the processing in Fig. 13.

Steps S158 and S159 are display processing indicating that no register setting data backup 205 exists. The CPU 21 displays "No data exists" in the shop name stamp area (step S158), displays "No data exists" in the apparatus image area (step S159), and then ends the processing in Fig. 13.

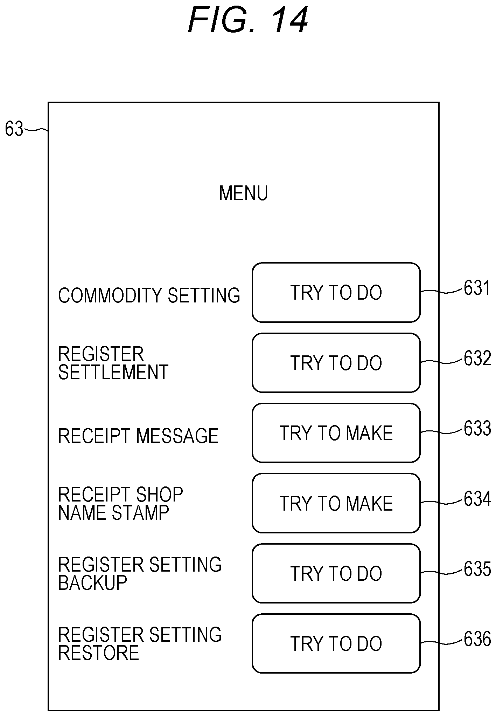

Fig. 14 is a menu screen 63.

The menu screen 63 includes a commodity setting button 631, a register settlement button 632, a receipt message creation button 633, a receipt shop name stamp creation button 634, a register setting backup button 635, and a register setting restore button 636.

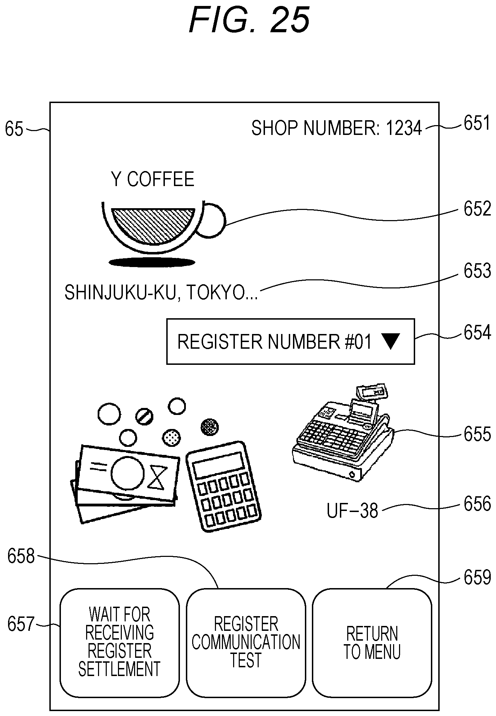

The commodity setting button 631 is a button for shifting to a screen (not illustrated) that is used to set a new commodity in the electronic cash register 3, and to change settings of existing commodities. The register settlement button 632 is a button for shifting to a register settlement screen 65 shown in Fig. 25 described below. The receipt message creation button 633 is a button for shifting to a receipt message generation screen (not illustrated). The receipt shop name stamp creation button 634 is a button for shifting to a shop name stamp generation screen (not illustrated).

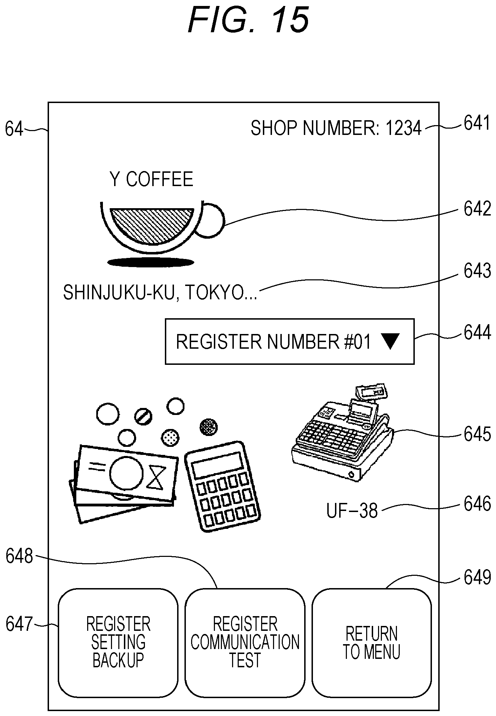

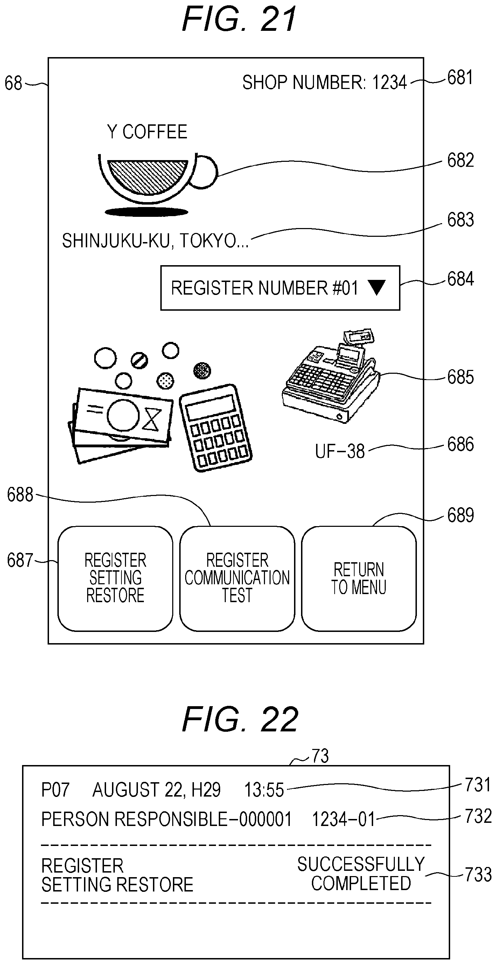

The register setting backup button 635 is a button for shifting to a register setting backup screen 64 shown in Fig. 15 described below. The register setting restore button 636 is a button for shifting to a register setting restore screen 68 shown in Fig. 21 described below.

Fig. 15 is the register setting backup screen 64.

The register setting backup screen 64 displays a shop number text box 641, a shop name stamp area 642, a receipt message box 643, a register selection picker 644, an apparatus image area 645, a model name text box 646, a register setting backup button 647, a register communication test button 648, and a "Return to menu" button 649.

The shop number text box 641 displays a number of a shop that is currently being selected. A shop name stamp is displayed in the shop name stamp area 642. The receipt message box 643 displays a receipt message. Displaying the shop name stamp and the receipt message enables the customer engineer to easily identify a shop installed with an electronic cash register that is a backup source of the register setting data backup 205.

In a case where the shop is installed with the plurality of electronic cash registers 3, the register selection picker 644 serves as a picker for accepting a switching selection of any of the electronic cash registers 3. Here, "Register number #01" is displayed. An image of the electronic cash register 3 that is currently being selected is displayed in the apparatus image area 645. The model name text box 646 displays a model name of the electronic cash register 3 that is currently being selected.

When a switching selection is accepted by the register selection picker 644, if a model of a sales data processing device after the switching selection differs from a model of a sales data processing device before the switching selection, the apparatus image is switched, and is displayed on the display unit.

The register setting backup button 647 is a button for receiving the register setting data 305 in the electronic cash register 3 of a communication partner, and for backing up the received register setting data 305 as the register setting data 305 of the electronic cash register 3 selected by the register selection picker 644. The register communication test button 648 is a button for performing a communication test with the electronic cash register 3 of the communication partner. The "Return to menu" button 649 is a button for returning to the menu screen 63 shown in Fig. 14.

During the execution of backup processing with the electronic cash register 3, the register setting backup screen 64 displays a shop name stamp in the shop name stamp area 642, and displays an image of the electronic cash register 3 in the apparatus image area 645. This enables the user to easily determine association of the electronic cash register 3 with data transmitted/received to/from this electronic cash register 3. It should be noted that during the execution of restore processing, settlement processing, or inspection processing, the register setting backup screen 64 may display a shop name stamp in the shop name stamp area 642, and may display an image of the electronic cash register 3 in the apparatus image area 645.

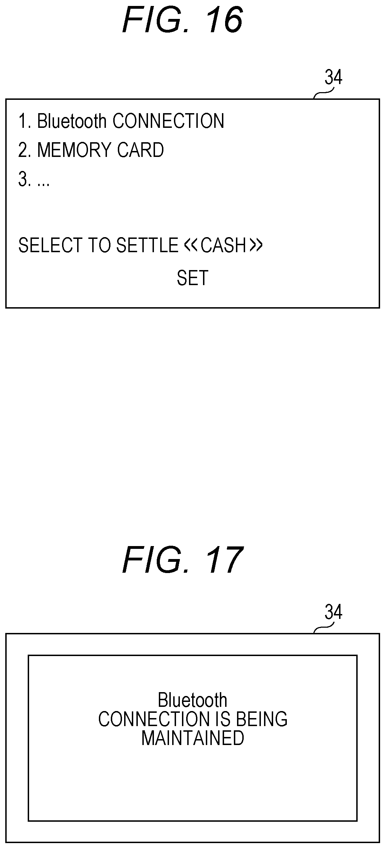

Fig. 16 is an operation screen of the electronic cash register 3.

The display unit 34 of the electronic cash register 3 displays an operation screen. Here, as a backup destination, a selection can be made by a number from among Bluetooth (registered trademark) connection, Memory card, and others. Here, when a numeric key "1" is pressed, the electronic cash register 3 is brought into a Bluetooth (registered trademark) connection waiting state. Moreover, when communication with the smart phone 2 is established, the electronic cash register 3 shifts to a screen shown in Fig. 17, the screen indicating that wireless communication is being performed.

Fig. 17 is a display screen indicating that wireless communication is being performed.

"Bluetooth (registered trademark) connection is being maintained" is displayed on the display unit 34 of the electronic cash register 3. At this point of time, various kinds of data can be backed up or restored via the smart phone 2.

It should be noted that the electronic cash register 3 may always wait for advertisement of Bluetooth (registered trademark), but is not limited thereto.

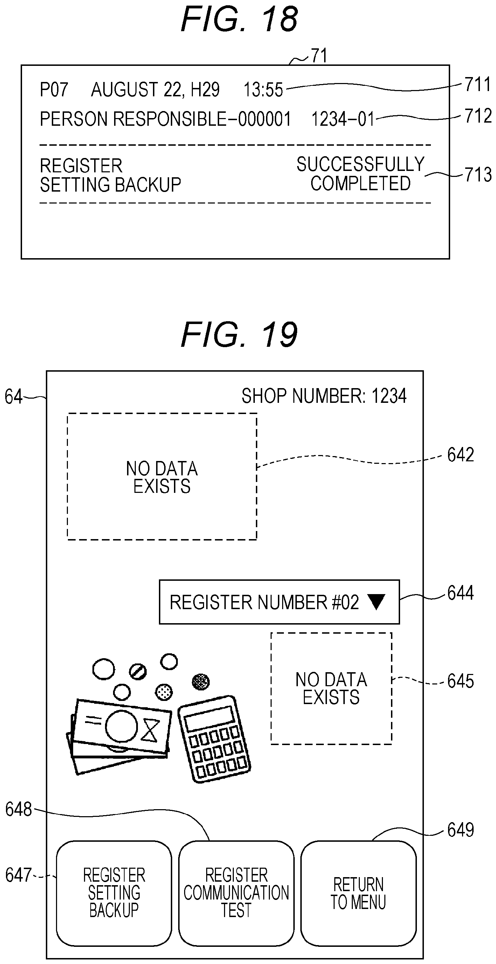

Fig. 18 illustrates execution result printing 71 obtained when a register setting backup has been successfully completed.

The execution result printing 71 is printed on a piece of receipt paper by the electronic cash register 3. A date and time field 711, an identification information field 712, and a backup result field 713 are printed.

The date and time when the register setting backup has been executed is printed in the date and time field 711. A combination of a shop number and a register number is printed in the identification information field 712. "Register setting backup has been successfully completed" is printed in the backup result field 713. This execution result printing 71 enables the customer engineer to certify the result of the register setting backup for other persons.

Fig. 19 is the register setting backup screen 64 displayed when register setting data has not been backed up.

Differently from the register setting backup screen 64 shown in Fig. 15, this register setting backup screen 64 displays "No data exists" in the shop name stamp area 642 and the apparatus image area 645.

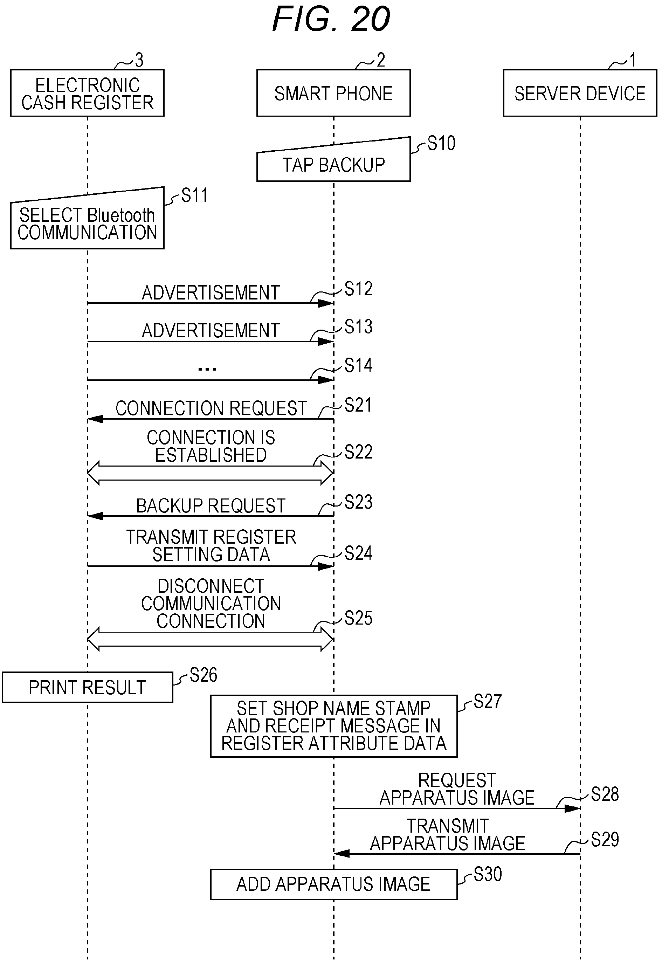

Fig. 20 is a sequence diagram illustrating backup operation of backing up register settings.

A case where the customer engineer taps the register setting backup button 647 on the register setting backup screen 64 is considered (step S10).

The customer engineer operates the keyboard 38 of the electronic cash register 3 to select Bluetooth (registered trademark) communication (step S11). Consequently, the electronic cash register 3 displays a screen shown in Fig. 17 on the display unit 34, and periodically transmits an advertisement to the outside (steps S12 to S14). It should be noted that the customer engineer may operate the keyboard 38 of the electronic cash register 3 to select Bluetooth (registered trademark) communication in advance before tapping the register setting backup button 647.

The smart phone 2 transmits a connection request to the electronic cash register 3 (step S21), and a connection is established (step S22). The smart phone 2 requests the electronic cash register 3, to which the communication connection has been established, to execute a backup (step S23). In response to this request, the electronic cash register 3 executes the backup, and transmits the register setting data 305 to the smart phone 2 (step S24). Subsequently, the electronic cash register 3 disconnects the communication connection (step S25), and then prints a result of the execution (step S26). This execution result printing is shown in Fig. 18.

The smart phone 2 sets the shop name stamp and the receipt message, which have been obtained from the register setting data 305, in the register attribute data 201 (step S27). The smart phone 2 requests an apparatus image for the server device 1 (step S28). The server device 1 transmits the apparatus image (step S29). The smart phone 2 adds the received apparatus image to its own apparatus image 202 (step S30). Consequently, the smart phone 2 ends the series of operation related to the backup.

Fig. 21 is a register setting restore screen 68.

The register setting restore screen 68 displays a shop number text box 681, a shop name stamp area 682, a receipt message box 683, a register selection picker 684, an apparatus image area 685, a model name text box 686, a register setting restore button 687, a register communication test button 688, and a "Return to menu" button 689.

The shop number text box 681 displays a number of a shop that is currently being selected. A shop name stamp is displayed in the shop name stamp area 682. The receipt message box 683 displays a receipt message. Displaying the shop name stamp and the receipt message enables the customer engineer to easily identify a restore target in the register setting data backup 205.

In a case where the shop is installed with the plurality of electronic cash registers 3, the register selection picker 684 serves as a picker for selecting any of the electronic cash registers 3. Here, "Register number #01" is displayed. An image of the electronic cash register 3 that is currently being selected is displayed in the apparatus image area 685. The model name text box 686 displays a model name stored in the register setting data backup 205 that has been received from the electronic cash register 3 that is currently being selected.

The register setting restore button 687 is a button for restoring, in the electronic cash register 3 of the communication partner, the register setting data backup 205 related to the electronic cash register 3 selected by the register selection picker 644. The register communication test button 688 is a button for performing a communication test with the electronic cash register 3 of the communication partner. The "Return to menu" button 689 is a button for returning to the menu screen 63 shown in Fig. 14.

Fig. 22 illustrates execution result printing 73 obtained when register setting restore has been successfully completed.

The execution result printing 73 is printed on a piece of receipt paper by the electronic cash register 3. A date and time field 731, an identification information field 732, and a backup result field 733 are printed.

The date and time when the register setting restore has been executed is printed in the date and time field 731. A combination of a shop number and a register number is printed in the identification information field 732. "Register setting restore has been successfully completed" is printed in the backup result field 733. This execution result printing 73 enables the customer engineer to certify the result of the register setting restore for other persons.

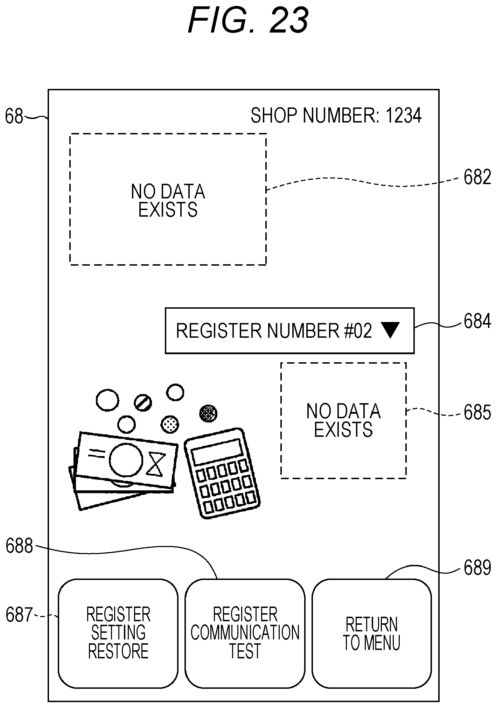

Fig. 23 is a register setting restore screen 68 displayed when register setting data has not been backed up.

Differently from the register setting restore screen 68 shown in Fig. 21, this register setting restore screen 68 displays "No data exists" in the shop name stamp area 682 and the apparatus image area 685. Moreover, the register setting restore button 687 is invalid displayed. Consequently, the smart phone 2 informs the user (customer engineer) that restore cannot be executed.

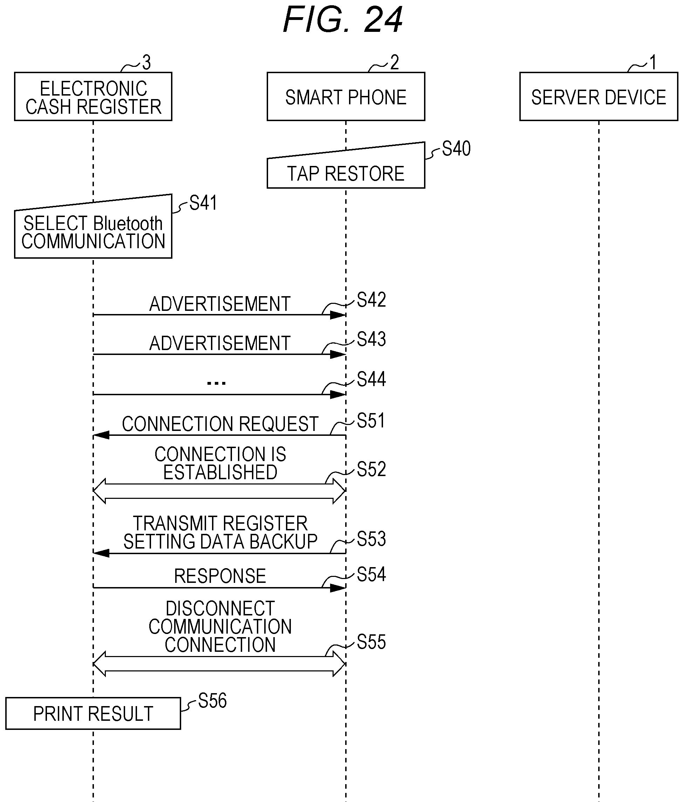

Fig. 24 is a sequence diagram illustrating restore operation of restoring register settings.

A case where the customer engineer taps the register setting restore button 687 on the register setting restore screen 68 is considered (step S40).

The customer engineer operates the keyboard 38 of the electronic cash register 3 to select Bluetooth (registered trademark) communication (step S41). Consequently, the electronic cash register 3 displays a screen shown in Fig. 17 on the display unit 34, and periodically transmits an advertisement to the outside (steps S42 to S44).

The smart phone 2 transmits a connection request to the electronic cash register 3 (step S51), and a connection is established (step S52). The smart phone 2 transmits the register setting data backup 205 to the electronic cash register 3 to which the communication connection has been established (step S53). In response to this request, the electronic cash register 3 executes restore, and transmits a response thereof to the smart phone 2 (step S54). Subsequently, the electronic cash register 3 disconnects the communication connection (step S55), and then prints a result of the execution (step S56). This execution result printing is shown in Fig. 22.

Fig. 25 is a register settlement screen 65.

The register settlement screen 65 displays a shop number text box 651, a shop name stamp area 652, a receipt message box 653, a register selection picker 654, an apparatus image area 655, a model name text box 656, a "Wait for receiving register settlement" button 657, a register communication test button 658, and a "Return to menu" button 659.

The shop number text box 651 displays a number of a shop that is currently being selected. A shop name stamp is displayed in the shop name stamp area 652. The receipt message box 653 displays a receipt message. Displaying the shop name stamp and the receipt message enables the customer engineer to easily identify a shop installed with an electronic cash register that is instructed to perform settlement.

In a case where the shop is installed with the plurality of electronic cash registers 3, the register selection picker 654 serves as a picker for selecting any of the electronic cash registers 3. Here, "Register number #01" is displayed. An image of the electronic cash register 3 that is currently being selected is displayed in the apparatus image area 655. The model name text box 656 displays a model name of the electronic cash register 3 that is currently being selected

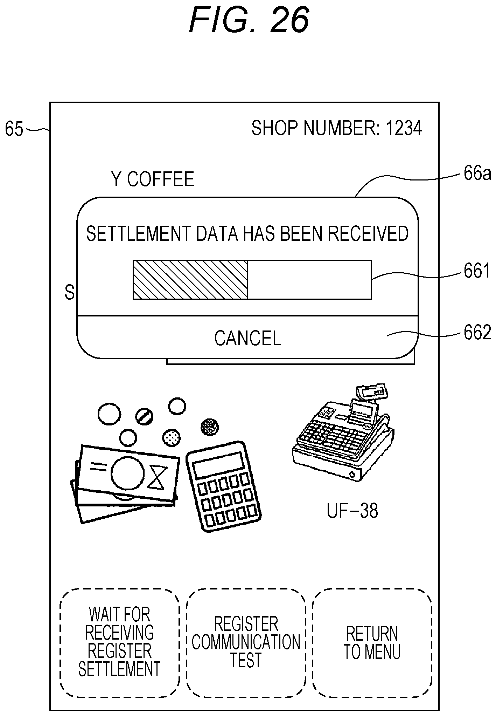

The "Wait for receiving register settlement" button 657 is a button for causing the electronic cash register 3 of the communication partner to settle the sales data 303, and for receiving settlement data as settlement data of the electronic cash register 3 selected by the register selection picker 644. When this "Wait for receiving register settlement" button 657 is tapped, the electronic cash register 3 of the communication partner starts settlement processing, and a settlement data receiving view 66a shown in Fig. 26 described below is displayed.

The register communication test button 658 is a button for performing a communication test with the electronic cash register 3 of the communication partner. The "Return to menu" button 659 is a button for returning to the menu screen 63 shown in Fig. 14.

Fig. 26 is a settlement data receiving view 66a.

The settlement data receiving view 66a displays a progress view 661 and a cancel button 662. The progress view 661 indicates the progress of receiving the settlement data. The cancel button 662 is a button for canceling the settlement processing to return to the previous register settlement screen 65.

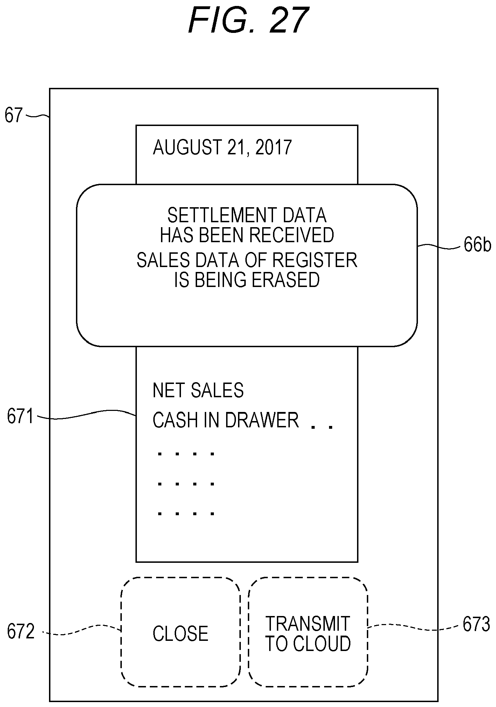

Fig. 27 is a settlement data erasing view 66b displayed when sales data is being erased.

After the progress view 661 and the cancel button 662 disappear from the settlement data receiving view 66a, the following message is displayed: "Settlement data has been received. Sales data of the register is being erased." Subsequently, the view shifts to the settlement data erasing view 66b. At this point of time, the settlement information screen 67 is displayed on the background of the settlement data erasing view 66b. This settlement information screen 67 displays a settlement information area 671 in which settlement data is displayed, a "Close" button 672 that is invalid displayed, and a "Transmit to cloud" button 673.

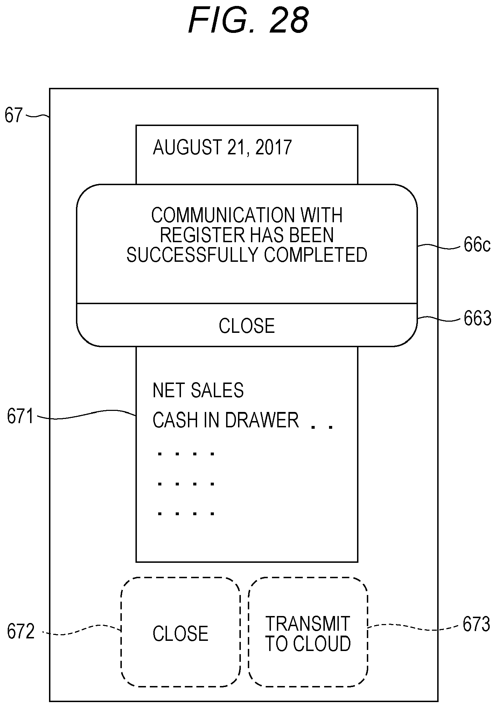

Fig. 28 is a settlement data reception complete view 66c displayed at the time of successful completion.

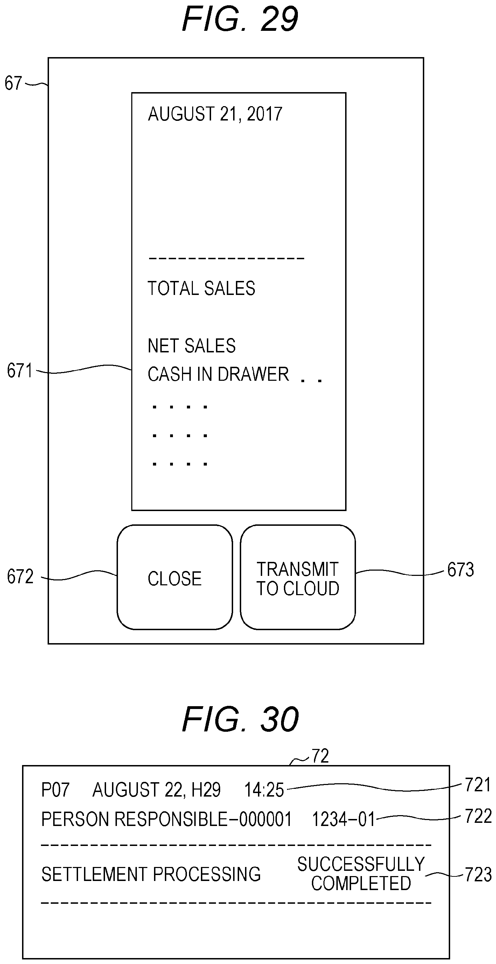

On completion of the erasure of the sales data in the electronic cash register 3, the settlement data reception complete view 66c shown in Fig. 28 is displayed. The settlement data reception complete view 66c displays a message of "Communication with the register has been successfully completed", and further displays the "Close" button 663. When the customer engineer taps the "Close" button 663, this settlement data reception complete view 66c is closed, and the screen shifts to the settlement information screen 67 shown in Fig. 29 described below.

Fig. 29 is the settlement information screen 67.

The settlement information screen 67 displays the settlement information area 671 in which settlement data is displayed, the "Close" button 672, and the "Transmit to cloud" button 673. Tapping the "Close" button 672 closes the settlement information screen 67. Tapping the "Transmit to cloud" button 673 causes the settlement data to be transmitted to the server device 1 of the cloud.

Fig. 30 illustrates execution result printing 72 output when the settlement processing has been successfully completed.

The execution result printing 72 is printed on a piece of receipt paper by the electronic cash register 3. A date and time field 721, an identification information field 722, and a settlement processing result field 723 are printed.

The date and time when the settlement processing has been executed is printed in the date and time field 721. A combination of a shop number and a register number is printed in the identification information field 722. "Settlement processing: Successfully completed" is printed in the settlement processing result field 723. This execution result printing 72 enables the customer engineer to certify, for other persons, that the settlement processing has been performed.

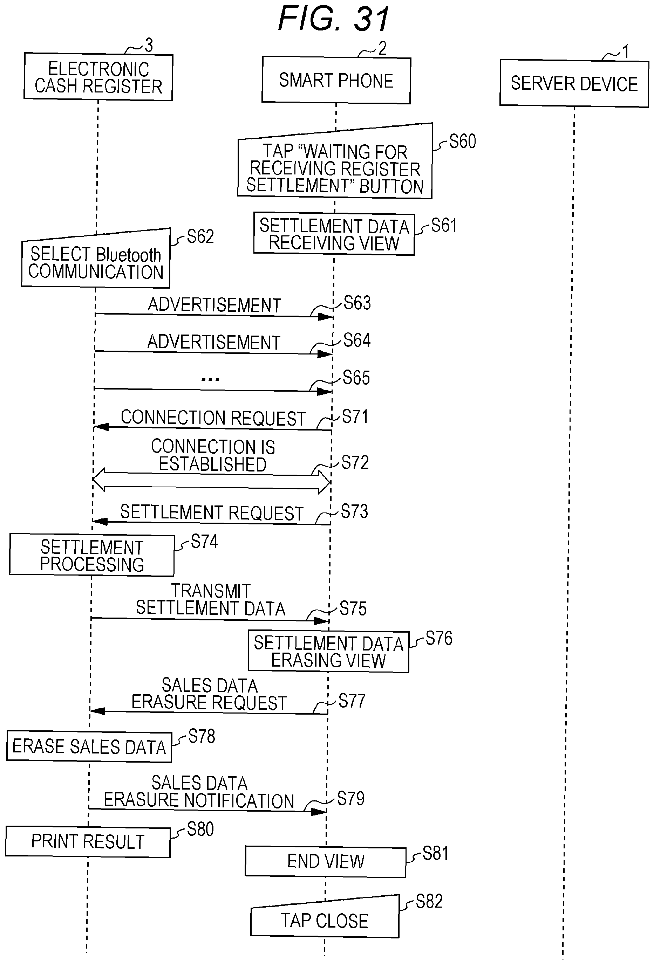

Fig. 31 is a sequence diagram illustrating register settlement operation.

The customer engineer operates the register tool application 20 on the smart phone 2, and taps the "Wait for receiving register settlement" button 657 of the register settlement screen 65 (step S60). The smart phone 2 displays the settlement data receiving view 66a shown in Fig. 26 (step S61).

The customer engineer operates the keyboard 38 of the electronic cash register 3 to display the screen shown in Fig. 16 on the display unit, and then selects Bluetooth (registered trademark) communication (step S62). Consequently, the electronic cash register 3 displays the screen shown in Fig. 17 on the display unit 34, and periodically transmits an advertisement to the outside (steps S63 to S65). The smart phone 2 transmits a connection request to the electronic cash register 3 (step S71), and a connection is established (step S73).

Next, the smart phone 2 transmits a settlement request to the electronic cash register 3 (step S73). The electronic cash register 3 performs settlement processing according to the request (step S74), and transmits settlement data to the smart phone 2 (step S75). On completion of the reception of the settlement data, the smart phone 2 displays the settlement data erasing view 66b shown in Fig. 27 to indicate that the settlement data is being erased.

Moreover, the smart phone 2 transmits an erasure request of sales data to the electronic cash register 3 (step S77). The electronic cash register 3 performs erasure processing of erasing the sales data according to the request (step S78), and transmits a sales data erasure notification to the smart phone 2 (step S79). The electronic cash register 3 disconnects the communication connection (step S80), and then prints a result of the settlement processing (step S81). This execution result printing 72 is shown in Fig. 30.

The smart phone 2 displays the settlement data reception complete view 66c shown in Fig. 28 (step S82), thereby indicating that the communication with the register has been ended. Subsequently, when the "Close" button 663 is tapped (step S83), the smart phone 2 closes this settlement data reception complete view 66c.

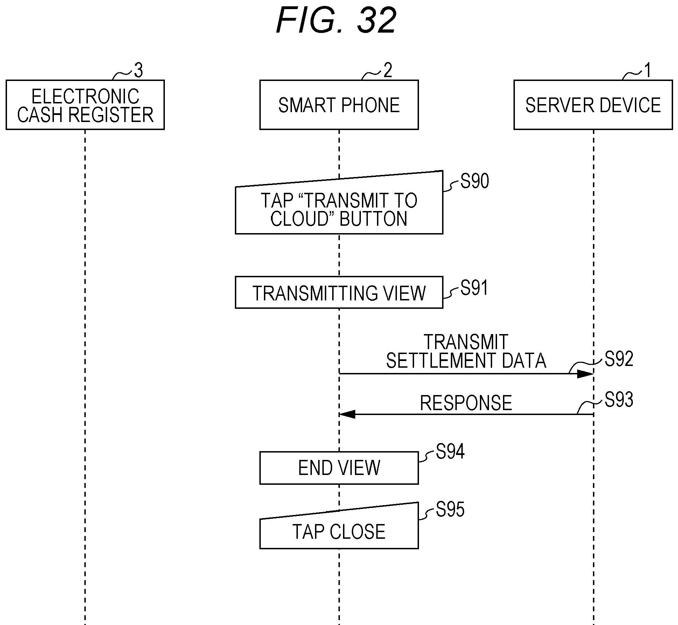

Fig. 32 is a sequence diagram illustrating operation of uploading register settlement data into a cloud.

The customer engineer operates the register tool application 20 on the smart phone 2, and taps the "Transmit to cloud" button 673 of the settlement information screen 67 (step S90). The smart phone 2 displays a transmitting view (not illustrated) (step S91). The smart phone 2 transmits settlement data to the server device 1 (step S92). The server device 1 stores the settlement data in the storage unit according to a request, and then transmits a response thereof to the smart phone 2 (step S93). On receipt of the response, the smart phone 2 displays an end view (not illustrated) (step S94). The "Close" button is displayed in this end view.

When the customer engineer taps the "Close" button of the end view (step S95), the smart phone 2 closes this end view.

### «Effects of present embodiment»

By using a shop name stamp specific to the electronic cash register 3, the customer engineer (user) is capable of easily identifying the association of the electronic cash register 3, to which the smart phone is communicably connected, with backup data. For example, a customer engineer of a register agency maintains a plurality of kinds of electronic cash registers in a plurality of shops. In a case where a register setting data backup in a smart phone is restored in an electronic cash register, displaying a shop name stamp and a model image included in the register setting data backup on a screen makes it possible to prevent the register setting data backup from being handled by mistake.

The present embodiment is effective for not only customer engineers of an agency, but also for a regional manager who obtains, by a smart phone, inspection data and settlement data of a register in an area of responsibility.

### <<Modified Example>>

In this modified example, the smart phone 2 is held up over the electronic cash register 3 to recognize the electronic cash register.

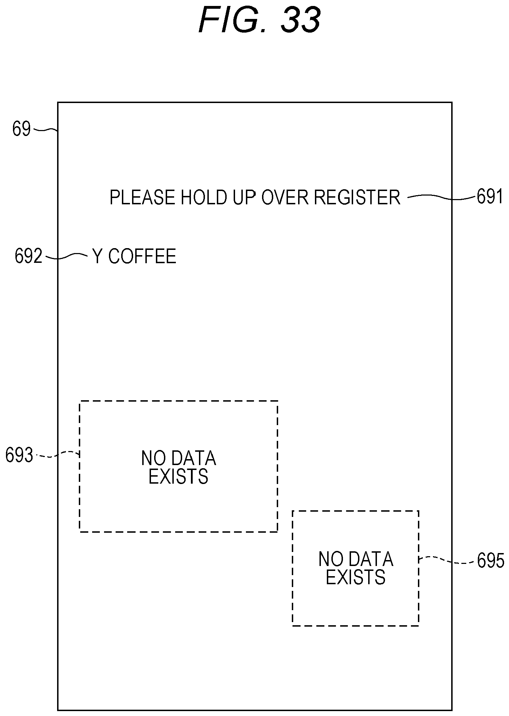

Fig. 33 illustrates a shop selection screen 69 in an initial state in the modified example.

The shop selection screen 69 displays a guidance 691 of "Please hold smart phone up over register" in the upper part thereof, and displays a corporation name text box 692, a shop name stamp area 693, and an apparatus image area 695.

The corporation name text box 692 displays "Y Coffee" as a corporation name of a corporation that manages the shop. The shop name stamp area 693 is an area in which a shop name stamp of a selected shop is displayed. Here, "No data exists" is displayed. The apparatus image area 695 is an area in which an image of the electronic cash register 3 in a selected shop is displayed. Here, "No data exists" is displayed.

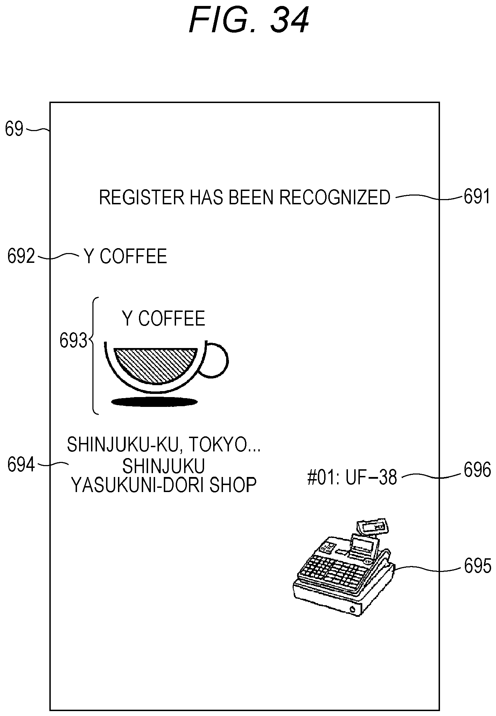

When the smart phone 2 is held up over the electronic cash register 3, the screen shifts to a screen shown in Fig. 34.

Fig. 34 is the shop selection screen 69 displayed after the recognition of a register.

"Register has been recognized" is displayed as the guidance 691. A shop name stamp of a selected shop is displayed in the shop name stamp area 693. The receipt message box 694 is newly displayed on the lower side thereof.

An image of the electronic cash register 3 in the Shinjuku Yasukuni-dori shop is displayed in the apparatus image area 695. The model name text box 696 is displayed on the upper side thereof. Incidentally, "#01" of the model name text box 696 means the first electronic cash register 3 in the Shinjuku Yasukuni-dori shop, and "UF-38" indicates a model name of the electronic cash register 3.

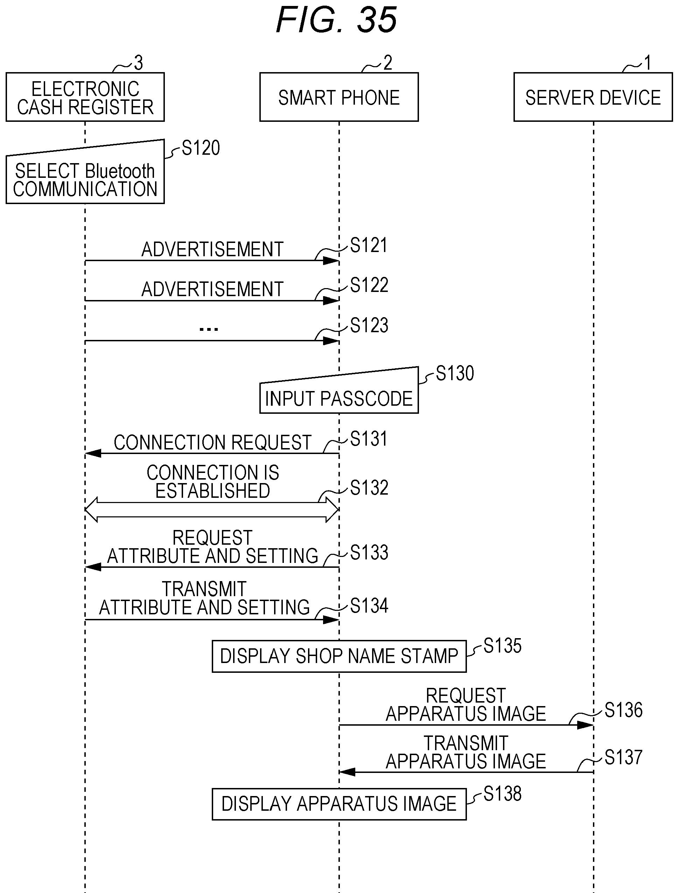

Fig. 35 is a sequence diagram illustrating register recognition operation.

The customer engineer operates the keyboard 38 of the electronic cash register 3 to select Bluetooth (registered trademark) communication (step S120). As the result, the electronic cash register 3 periodically transmits an advertisement to the outside (steps S121 to S123).

Next, the customer engineer starts the register tool application 20 on the smart phone 2, and then taps the ten-key 612 to input a passcode (step S130). Consequently, the smart phone 2 transmits a connection request to the electronic cash register 3 (step S131), and a connection is established (step S132). The smart phone 2 displays the shop selection screen 62, and requests the electronic cash register 3 to transmits the register setting data 305 (step S133). In response to this request, the electronic cash register 3 transmits the register setting data 305 to the smart phone 2 (step S134). The CPU 21 of the smart phone 2 stores the received register setting data 305 in the flash memory 232, and displays the shop name stamp data 201g and the receipt message data 201h on the shop selection screen 62 (step S135).

Moreover, the smart phone 2 transmits the model name data 201e to the server device 1 to request a model image related to this model name (step S136). The server device 1 transmits the requested model image to the smart phone 2 (step S137). As the result, the smart phone 2 displays the model image on the shop selection screen 62 (step S138).

### <<Other modified examples>>

The present invention is not limited to the above-described embodiments, and may be modified within the scope that does not deviate from the gist of the present invention. The present invention may be modified, for example, in the following manners (a) to (d).
(a) The apparatus image is not merely an external appearance image, but may be an image obtained by image capturing a state in which an electronic cash register is installed. This enables a customer engineer (user) to identify each individual electronic cash register more easily. In this case, as with the shop name stamp, if each electronic cash register stores an apparatus image, the apparatus image can be obtained without communicating with the server device 1, which is preferable.
(b) When an electronic cash register is connected through a short-distance wireless communication channel, the electronic cash register may display its own identification number (#01, etc.) on a display unit thereof. This enables the customer engineer to easily associate an identification number of the register set on the screen of the smart phone with an actual device.
(c) The execution result printing for the settlement processing and the backup may contain a shop name stamp and a model image. As the result, an electronic cash register that has produced the execution result can be easily identified.
(d) When a smart phone starts a task (such as backup, restore, inspection, settlement, etc.) that includes a series of data communication with an electronic cash register, the smart phone may first obtain shop name stamp data and model name data so as to display a shop name stamp and an apparatus image during the execution of the task. This enables easy identification during the execution of the task (during the execution of backup, during the execution of restore, during the execution of inspection, during the execution of settlement, etc.).

## Claims

1. A non-transitory computer-readable recording medium storing a program for causing a computer to execute steps, the steps comprising:
communication processing of communicating with a sales data processing device (3) through a wireless communication channel, and obtaining a shop identification image that is printed on a receipt by the sales data processing device (3); and
display control processing of causing the shop identification image obtained in the communication processing to be displayed on a display unit (25).

2. The recording medium according to claim 1,
the steps further comprising acceptance processing of accepting a selection of a target shop from among at least two shops,
wherein in the display control processing, a shop identification image that is printed on the receipt by the sales data processing device (3) installed in the shop selected by the acceptance processing is displayed on the display unit (25) together with an apparatus image indicating the sales data processing device (3).

3. The recording medium according to claim 2, **characterized in that**,
in the acceptance processing, a switching selection of switching a target from a sales data processing device (3) that is currently being selected as a target from among at least two sales data processing devices (3) installed in the selected shop to another sales data processing device (3) is accepted, and
in the display control processing, if a model of the another sales data processing device (3) switched as the target after the switching selection has been accepted in the acceptance processing differs from a model of the sales data processing device (3) before the switching selection, the apparatus image is switched, and is displayed on the display unit (25).

4. The recording medium according to claim 2, **characterized in that**
in the display control processing, during execution of a task including a series of data communication with the sales data processing device (3), the display unit (25) is caused to display the shop identification image or the apparatus image.

5. The recording medium according to claim 2, **characterized in that**
in the display control processing, when input operation of starting the execution of the task including the series of data communication with the sales data processing device (3) is accepted, the display unit (25) is caused to display the shop identification image or the apparatus image.

6. The recording medium according to claim 4, **characterized in that**
the task is backup processing for copying predetermined setting data that is applied to the sales data processing device (3).

7. The recording medium according to claim 4, **characterized in that**
the task is restore processing for applying setting data that has been backed up to the sales data processing device (3).

8. The recording medium according to claim 4, **characterized in that**
the task is settlement processing for receiving settlement data stored in the sales data processing device (3), and for deleting the settlement data from the sales data processing device (3).

9. The recording medium according to claim 2,
the steps further comprising model information acquisition processing of acquiring, through the wireless communication channel, model information stored in the selected sales data processing device (3),
wherein in the display control processing, the display unit (25) is caused to display the apparatus image on the basis of the model information acquired by the model information acquisition processing.

10. The recording medium according to claim 2, **characterized in that**
in the display control processing, the display unit (25) is caused to display a model name of the sales data processing device (3) together with the apparatus image.

11. The recording medium according to claim 2, **characterized in that**
in the display control processing, the display unit (25) is caused to display a receipt message that is printed on the receipt by the sales data processing device (3) installed in the shop selected by the acceptance processing, and that is specific to the shop, together with the shop identification image.

12. A management terminal (2) comprising:
communication units (291, 292) that communicates with a sales data processing device (3) through a wireless communication channel, and obtains a shop identification image to be printed on a receipt by the sales data processing device (3); and
a processor (21) that executes display control processing of causing a display unit (25) to display the shop identification image obtained through the communication units (291, 292).

13. The management terminal (2) according to claim 12, **characterized in that**,
the processor (21) further executes acceptance processing of accepting a selection of a shop, and
in the display control processing, a shop identification image that is printed on the receipt by the sales data processing device (3) installed in the shop selected by the acceptance processing is displayed on the display unit (25) together with an apparatus image indicating the sales data processing device (3).

14. A method for managing a sales data processing device (3), the method comprising:
a communication step of communicating with a sales data processing device (3) through a wireless communication channel, and obtaining a shop identification image to be printed on a receipt by the sales data processing device (3); and
a display control step of causing a display unit (25) to display the shop identification image obtained in the communication step.

15. The method for managing the sales data processing device (3) according to claim 14,
the method further comprising an acceptance step of accepting a selection of a shop,
wherein in the display control step, a shop identification image that is printed on the receipt by the sales data processing device (3) installed in the shop selected by the acceptance step is displayed on the display unit (25) together with an apparatus image indicating the sales data processing device (3).
